# EUROPEAN PATENT APPLICATION

(11) **EP 4 303 240 A1**
(43) Date of publication of application: **10.01.2024**
(21) Application number: 23184289.9
(22) Date of filing: 07.07.2023
(51) Int. Cl.: C08F 220/14, C08F 2/44, C08F 292/00, C08J 5/24, C08K 3/16, C08K 3/22, C08K 7/14

(54) **FIRE RESISTANT COPOLYMER MATRIX COMPOSITE**

(30) Priority: 08.07.2022 EP 22275091
(71) Applicant: B/E Aerospace, Inc., Winston-Salem, NC 27105 (US)
(72) Inventor: JOSE, Deepa, Kilkeel, BT34 4NG (GB); MCKIBBIN, Nigel, Banbridge, BT32 5PR (GB)
(74) Representative: Dehns

(57) **Abstract**

The present disclosure provides a polymer matrix composite comprising reinforcement fibres and a (meth)acrylate copolymer matrix formed from a (meth)acrylate monomer and a halogenated flame retardant monomer; a method of preparing the polymer matrix composite, and a composition for use in the method.

## Description

### Technical Field

The present disclosure provides a polymer matrix composite comprising fibrous reinforcement and a (meth)acrylate copolymer matrix formed from a (meth)acrylate monomer and a halogenated flame retardant monomer; a method of preparing the polymer matrix composite, and a composition for use in the method.

### Background of the disclosure

Polymer matrix composites (PMCs) are a class of material formed of fibres dispersed in a polymer matrix. PMCs are used in a variety of sectors to produce various components. For example, PMCs are used to fabricate panel bodies, doors, drive shafts, leaf springs, bumpers and race vehicle bodies in the automotive sector, to fabricate primary and secondary structural components, such as main cabin seat backs, seat pans and seat back legs, for passenger airbuses, space shuttles, military aircraft, and satellite systems in the aerospace sector, to fabricate boat/marine body components using fibre glass PMCs, kayaks and canoes in the marine sector, to fabricate footwear, sports components and equipment in the sports equipment sector, to fabricate medical implants, devices for orthopaedics, body parts for MRI scanners, tables for X-rays, and prosthetics in the bio-medical sector, to fabricate electrical panels, printed circuit boards, switch-gear, electrical connectors and insulators in the electrical sector, to fabricate storage containers for chemicals, high pressure containers, valves and pump housing, and for the restoration of bridges and in equipment such as booms, blades for windmills, and cranes.

PMCs used in certain applications, e.g. the aerospace sector, may be required to be lightweight and ideally strong and low in cost. For this reason, it would be attractive to use (meth)acrylate PMCs, such as PMMA-based PMCs, in such applications. PMMA-based PMC seating products can be manufactured using traditional thermoset processes like resin infusion. However, for safety reasons, PMCs used in sectors such as the aerospace sector must also comply with relevant fire standards, such as Federal Aviation Regulations, Section 25.853, but PMMA-based PMCs are highly flammable.

The present disclosure provides a composition for forming a (meth)acrylate copolymer matrix and a method of forming a PMC therefrom which complies with the relevant fire standards, thereby enabling (meth)acrylate copolymer-based PMCs to be used in the aerospace sector.

### Summary of the Disclosure

Viewed from a first aspect, the present disclosure provides a composition, said composition comprising a (meth)acrylate monomer and a halogenated flame retardant monomer.

The aforementioned components of the composition, or the composition itself, may be used in a method for preparing a polymer matrix composite.

Thus, viewed from a further aspect, the present disclosure provides a method of preparing a polymer matrix composite, said method comprising:
(i) contacting fibrous reinforcement with a (meth)acrylate monomer and a halogenated flame retardant monomer, e.g. the above-mentioned composition; and
(ii) polymerizing the monomers to form a (meth)acrylate copolymer matrix in contact with the fibrous reinforcement.

Polymer matrix composites (PMCs) comprising a (meth)acrylate copolymer matrix and fibrous reinforcement are also disclosed, and may be prepared via the method described herein.

Thus, viewed from a further aspect, the present disclosure provides a polymer matrix composite comprising and/or formed from fibrous reinforcement and a (meth)acrylate copolymer matrix formed from a (meth)acrylate monomer and a halogenated flame retardant monomer. Articles comprising and formed from the PMC described herein form a further aspect of the disclosure.

It will be readily appreciated by the skilled person that the various optional and preferred features of the disclosure as described herein may be applicable to other aspects of the disclosure. For example, features disclosed in connection with the compositions, article and PMC may be applicable to the method, and vice versa.

### Detailed description

The present disclosure provides a composition comprising a (meth)acrylate monomer and a halogenated flame retardant monomer.

The composition herein described is suitable for use in the production of polymer matrix composites in which the composition forms a matrix for fibrous reinforcement.

The present disclosure therefore also provides a method of preparing a polymer matrix composite, said method comprising:
(i) contacting fibrous reinforcement with a (meth)acrylate monomer and a halogenated flame retardant monomer, i.e. a composition as described herein; and
(ii) polymerizing the monomers, e.g. in said composition, to form a (meth)acrylate copolymer matrix in contact with the fibrous reinforcement.

The term "(meth)acrylate monomer" encompasses materials which can be polymerized to form a (meth)acrylate polymer or copolymer, and combinations thereof. The terms "monomer" and "polymerizable compound" may be used interchangeably. The (meth)acrylate monomer may be, or comprise, a polymerizable (meth)acrylate compound, e.g. a polymerizable alkyl (meth)acrylate compound, e.g. alkyl methacrylates, alkyl acrylates, or a combination thereof.

While the (meth)acrylate monomers and polymerizable (meth)acrylate compounds will be described primarily as (meth)acrylates, this should be understood to include the equivalent (meth)acrylic acids.

The (meth)acrylate monomers are polymerizable (meth)acrylate compounds, and thus oligomers are also included, provided they are polymerizable to form a (meth)acrylate polymer.

The (meth)acrylate monomers and polymerizable (meth)acrylate compounds may be di(meth)acrylates, tri(meth)acrylates or tetra(meth)acrylates.

The monomers may be in the form of what may be termed a "resin" or "resin-formulation", e.g. the monomers may be a resin or resin formulation comprising acrylate monomers such as methyl (meth)acrylate monomers or in the form of a (meth)acrylate monomer based resin or resin formulation.

In some embodiments, the(meth)acrylate monomer or polymerizable (meth)acrylate compound may be an acrylate resin, or an acrylate system in a monomeric or oligomeric state with a viscosity suitable for resin infusion. Suitable viscosities for the monomer or polymerizable compound are 2 to 1000 mPa·s, e.g. 5 to 800 mPa·s, e.g. 10 to 500 mPa s.

As used herein, the term "(meth)acrylate" can refer to methacrylate and/or acrylate. The alkyl group of alkyl (meth)acrylates may be C₁₋₂₂, optionally C₁₋₁₂, optionally C₁₋₆, optionally C₁₋₃, alkyl groups, e.g. methyl, ethyl or propyl. Suitable monomers include methyl (meth)acrylate, ethyl (meth)acrylate and propyl (meth)acrylate. Combinations of (meth)acrylate monomers may also be used.

In some embodiments, the (meth)acrylate monomer is, or comprises, methyl methacrylate (MMA).

In some embodiments, the (meth)acrylate polymer is a thermoplastic (meth)acrylate polymer, and thus the (meth)acrylate monomers are monomers for forming a thermoplastic (meth)acrylate polymer.

The term "halogenated flame retardant monomer" encompasses materials which can be polymerized to form a polymeric halogenated flame retardant, or copolymer thereof, i.e. polymerizable halogenated flame retardants. The halogenated flame retardant monomer is a material capable of copolymerizing with the (meth)acrylate monomer as herein described. Combinations of halogenated flame retardant monomers may also be used. The flame retardant is a compound capable of increasing the fire-resistance of the material to which it is added, in this case the (meth)acrylate.

Suitable halogenated flame retardant monomers include brominated flame retardant monomers, i.e. polymerizable brominated flame retardants. In some embodiments, the flame retardant monomer is a polymerizable halogenated (meth)acrylate, e.g. a polymerizable brominated (meth)acrylate, optionally a polymerizable brominated acrylate. Acrylic functionalized reactive flame retardant comonomers can produce free radicals during polymerizations with the (meth)acrylate monomer and thus become incorporated in to the (meth)acrylate polymer backbone.

The halogenated flame retardant monomer may be a brominated flame retardant monomer falling within the following general formula: 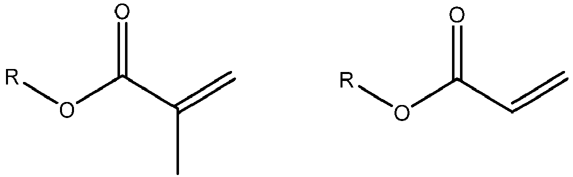 where R is a brominated aromatic (e.g. a brominated phenyl or benzyl group) or aliphatic group (e.g. a branched or unbranched brominated C₁₋₂₀, for example C₁₋₁₀, for example C₂-C₆, alkyl group). The brominated aromatic or aliphatic group may comprise at least 1, 2, 3, 4, or 5 bromine atoms.

Examples of polymerizable brominated acrylates include 2,3,4,5,6-pentabromobenzylacrylate, 2,3,4,5,6-pentabromobenzyl methacrylate, tribromoneopentyl acrylate (also known as trinol acrylate) and tribromoneopentyl methacrylate. These may be used individually, or in combination, as the halogenated flame retardant monomers as outlined herein. 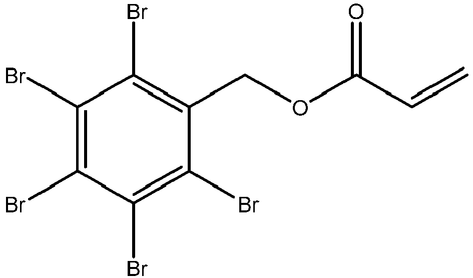 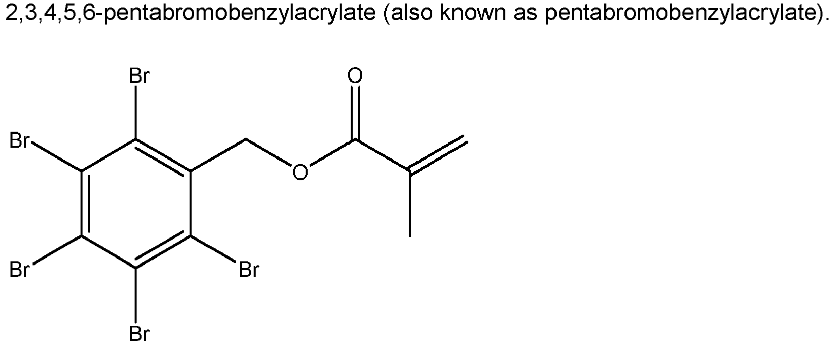 2,3,4,5,6-pentabromobenzylmethacrylate (also known as pentabromobenzylmethacrylate).

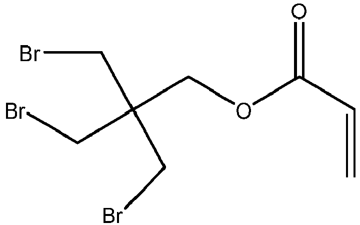

Tribromoneopentyl acrylate (also known as trinol acrylate).

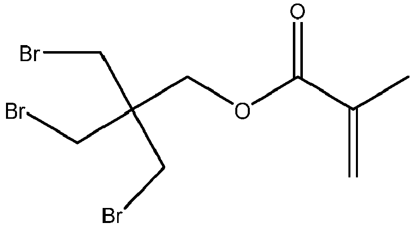

### Tribromoneopentyl methacrylate.

The composition may comprise the (meth)acrylate monomer in an amount of 70 to 95 wt.%, optionally 80 to 90 wt.%, optionally 85 wt.%, based on the total weight of monomers in the composition (or the total weight of the composition as a whole).

The composition may comprise the halogenated flame retardant monomer in an amount of 5 to 30 wt.%, optionally 10 to 20wt.%, optionally 15 wt.%, based on the total weight of monomers in the composition (or the total weight of the composition as a whole).

The ratio between the weight of (meth)acrylate monomer and the weight of halogenated flame retardant monomer may be from 1:2 to 1:20, or from 1:2 to 1:19, or from 1:4 to 1:9, in particular 1:6, 1:5.5 or 1:5.

The composition of the present disclosure may comprise more than one type of (meth)acrylate monomer. For example, the (meth)acrylate monomer part of the composition (which may be a resin formulation) may comprise 50-100%, 60-95, 70-90, 70-80, of an acrylate monomer as described herein, e.g. methylmethacrylate, with any remainder being comonomers or other additives.

In some embodiments, the (meth)acrylate monomer or (meth)acrylate compound is any compound capable of polymerising with itself of other compounds to form a poly(meth)acrylate e.g. polymethylmethacrylate.

Monomer compositions such as Elium^{®}, e.g. Elium^{®} 150, Elium^{®} 151 O, or Elium^{®} 151 SA by Arkema may be used as the (meth)acrylate monomer of the present disclosure. The halogenated flame retardant monomer can be mixed with Elium^{®} 150 to provide the above-mentioned composition.

The (meth)acrylate monomer part of the composition of the present disclosure may be a multi-component resin system, e.g. where two or more resin formulations (i.e. monomers/compounds as described herein) are mixed, e.g. in a 1:1 weight ratio prior to polymerisation. An example is Elium^{®} 151 O/SA, which is a two-component resin system which is mixed in a 1:1 ratio by weight to form a methacrylate polymer.

In some embodiments, the glass transition temperature (Tg) of the (meth)acrylate polymer is above 80 °C, for example when taking the onset of storage modulus from DMA as the Tg.

In addition to the above-mentioned (meth)acrylate monomer and the halogenated flame retardant monomer, the composition may comprise further monomers. In some embodiments, the composition may further comprise at least one monomer having at least one ethylenic unsaturation that can copolymerize with methyl methacrylate. Such monomers include styrene, alpha-methylstyrene, acrylic and methacrylic acids and alkyl(meth)acrylates in which the alkyl group has from 1 to 12 carbon atoms, such as methyl acrylate, ethyl acrylate or ethyl, butyl or 2-ethylhexyl (meth)acrylate. The further monomer may be an alkyl acrylate in which the alkyl group has from 1 to 4 carbon atoms.

The monomers may be present in an amount of greater than or equal to 20 wt.% of the total composition (i.e. at least 20 wt.% of the composition is (meth)acrylate monomer, halogenated flame retardant monomer, and, optionally, any other monomer), greater than or equal to 50 wt.% of the composition, greater than or equal to 60 wt.% of the composition, greater than or equal to 70 wt.% of the composition, greater than or equal to 80 wt.% of the composition, or greater than or equal to 90 wt.% of the composition, or greater than or equal to 95 wt.% of the composition. In some embodiments, the amount of (meth)acrylic monomer and halogenated flame retardant monomer, in relation to the composition as a whole, is up to and including 99 wt. %.

The composition may further comprise an inorganic flame retardant synergist. The inorganic flame retardant synergist may be selected from metal oxides, borates, silicates, stannates, organometallics, or combinations thereof. Suitable metal oxides include iron oxide, tin oxide, zinc oxide, aluminium trioxide, alumina, antimony trioxide, antimony pentoxide, bismuth oxide, molybdenum trioxide, tungsten trioxide, or any combination thereof. Suitable borates include zinc borate. Suitable silicates include antimony silicates. Suitable stannates include zinc stannate, zinc hydroxystannate, or combinations thereof. Suitable organometallics include ferrocene.

In some embodiments, the inorganic flame retardant synergist is antimony trioxide and/or antimony pentoxide. In some embodiments, the inorganic flame retardant synergist is antimony trioxide.

The inorganic flame retardant synergist may be present in the composition in an amount of up to and including 20 wt.%, or up to and including 15 wt.%, or up to and including 10 wt.%, or up to and including 5 wt.%, or up to and including 4 wt.%, or up to and including 3 wt.%, or up to and including 2 wt.%, or up to and including 1 wt.%, based on the total weight of the composition. In some embodiments, the amount of inorganic flame retardant synergist in relation to the composition is at least 0.5 wt.%. In some embodiments, the amount of inorganic flame retardant synergist in relation to the composition as a whole is 0.5 to 15 wt.%., e.g. 5 to 10 wt.%., e.g. 3 to 10 wt.%, e.g. 3-6 wt.%.

The inorganic flame retardant synergist may be in the composition (and optionally also in the PMC disclosed herein) in the form of particles.

Without wishing to be bound by theory, it is thought that, when used in a composite material such as the PMC herein described, the inorganic flame retardant synergist and the halogenated, e.g. brominated, component of the copolymer may work in combination to reduce the flammability of the composite material. For example, when the inorganic flame retardant synergist is antimony trioxide, HBr released from the copolymer in a fire reacts with the antimony trioxide to form SbBr₃ and water. SbBr₃ is volatile and imparts better flame compliance to the composite material by flame radical scavenging in the gas phase.

The composition may comprise further components or additives, such as anti-dripping agents, heat stabilizers, weather stabilizers, lubricants, inorganic fillers, coupling agents, light stabilizers, antioxidants, dyes, pigments, anti-static agents, release agents, dispersants, inorganic fibres, parting agents, fluidizing agents, viscosity control agents, and any combination thereof. In some embodiments, the (meth)acrylate monomer and halogenated flame retardant monomer form at least 80 wt.%, 90 wt.% or 95 wt.% and up to 99 wt.% or 100 wt.% of the composition.

The composition may further comprise a radical initiator, also termed a catalyst. The catalyst may be a peroxide catalyst. The radical initiator may be chosen from diacyl peroxides, peroxy esters, dialkyl peroxides, peroxyacetals or azo compounds. Radical initiators which may be suitable are, for example, isopropyl carbonate, dibenzoyl peroxide, benzoyl peroxide, lauroyl peroxide, caproyl peroxide, dicumyl peroxide, tert-butyl perbenzoate, tert-butyl per(2-ethylhexanoate), cumyl hydroperoxide, 1,1-di(tert-butylperoxy)-3,3,5-trimethyl-cyclohexane, tert-butyl peroxyisobutyrate, tert-butyl peracetate, tert-butyl perpivalate, amyl perpivalate, tert-butyl peroctoate, azobisisobutyronitrile (AIBN), azobisiso-butyramide, 2,2'-azobis(2,4-dimethylvaleronitrile) or 4,4'-azobis(4-cyanopentanoic), or any combination thereof. In a particular embodiment, the radical initiator is dibenzoyl peroxide.

The catalyst may be present in an amount of up to and including 5 wt.% of the composition (i.e. up to and including 5 wt.% of the composition is catalyst), up to and including 4 wt.% of the composition, up to and including 3 wt.% of the composition, up to and including 2 wt.% of the composition, up to and including 2.5 wt.% of the composition, up to and including 1.5 wt.% of the composition, up to and including 1 wt.% of the composition, or up to and including 0.5 wt.% of the composition. In some embodiments, the amount of catalyst is from 1.5 to 3.0 wt.% or 2.0 to 2.5 wt.% of the composition.

The catalyst may be present in an amount of up to and including 5 wt.% of the total combined weight of monomers (i.e. the total combined weight of (meth)acrylate monomer and halogenated flame retardant monomer), up to and including 4 wt.% of the total combined weight of monomers, up to and including 3 wt.% of the total combined weight of monomers, up to and including 2 wt.% of the total combined weight of monomers, up to and including 2.5 wt.% of the total combined weight of monomers, up to and including 1.5 wt.% of the total combined weight of monomers, up to and including 1 wt.% of the total combined weight of monomers, or up to and including 0.5 wt.% of the total combined weight of monomers. In some embodiments, the amount of catalyst is from 2.5 to 3.0 wt.% of the total combined weight of monomers.

The content of radical initiator with respect to the composition may be from 0.05 to 5% by weight, optionally between 0.1 and 4% by weight, optionally between 0.5 and 3.5% by weight, optionally between 1 and 3% by weight, optionally between 2 and 3% by weight.

The composition may comprise a chain-limiting agent. This may serve to control the molecular weight of the eventual copolymer. The chain-limiting agent may be γ-terpinene or terpinolene. The content of chain-limiting agent may be between 0 and 2500 ppm by weight, optionally between 0 and 1500 ppm by weight with respect to the composition (or the monomer content thereof).

In some embodiments, the above-mentioned composition may be combined with fibrous reinforcement, e.g. fibres, e.g. those described herein with respect to the method and composite, for example the one dimensional fibres, thus forming a mixture of the fibrous reinforcement and the composition as herein described. In such embodiments, the weight ratio of the fibrous reinforcement to the composition may be 60:40 to 80:20, for example 65:35 to 75:25. Further features of the fibrous reinforcement are discussed later in the disclosure.

The composition is suitable for use in the production of polymer matrix composites in which the composition forms a copolymer matrix for fibrous reinforcement.

The present disclosure therefore also provides a method of preparing a polymer matrix composite, said method comprising:
(i) contacting fibrous reinforcement with a composition as described herein (i.e. composition comprising a (meth)acrylate monomer and a halogenated flame retardant monomer); and
(ii) polymerizing the monomers to form a (meth)acrylate copolymer matrix in contact with the fibrous reinforcement.

The composition which is contacted with the fibrous reinforcement in the method described herein may contain other components, e.g. catalysts/radical initiators, and/or chain-limiting agents, as discussed herein in relation to the composition.

The fibrous reinforcement may be present in an amount of at least 20% by weight, optionally at least 40% by weight, optionally at least 50% by weight, or optionally at least 55% by weight, or optionally at least 60% by weight, or optionally at least 70% of fibrous reinforcement based on the total weight of the composition plus the fibrous reinforcement, i.e. the monomers, fibrous reinforcement, and any other components. The fibrous reinforcement may be present in an amount of up to 99% by weight, optionally at most 95% by weight, optionally at most 90% by weight, optionally at most 80% by weight, or optionally at most 70% by weight.

In an embodiment, the fibrous reinforcement may be present in an amount of 50-90 wt.%, e.g. 60-80 wt.%, e.g. 62-67 wt.% based on the total weight of the monomers, fibrous reinforcement, and any other components. In an embodiment, the fibrous reinforcement may be present in an amount of 70-75 wt.% based on the total weight of the monomers, fibrous reinforcement, and any other components. In an embodiment, the fibrous reinforcement is or comprises carbon fibres which are present in an amount of 60-70 wt.%, e.g. 62-67 wt.% based on the total weight of the monomers, fibrous reinforcement, and any other components. In an embodiment, the fibrous reinforcement is or comprises glass fibres which are present in an amount of 70-80 wt.%, e.g. 70-75 wt.% based on the total weight of the monomers, fibrous reinforcement, and any other components.

The fibrous reinforcement can have different forms and dimensions, i.e. those typical of fibrous reinforcement for PMCs. In an embodiment, the fibrous reinforcement may be fibres, e.g. discontinuous fibres. The fibrous reinforcement comprises, or is formed from, fibres and/or fibrous materials described herein and can be one dimensional, two dimensional or three dimensional. The fibrous reinforcement can be in the form of a preform, i.e. a structure comprising fibres shaped to form a particular component. In some embodiments, the preform is a fabric preform.

One dimensional fibres include linear long fibres. The fibres may be discontinuous or continuous. The fibres may be arranged randomly or as a continuous filament parallel to each other. A fibre is defined by its aspect ratio, which is the ratio between length and diameter of the fibre. The fibres may have an aspect ratio of at least 1000, optionally at least 1500, optionally at least 2000, optionally at least 3000 and optionally at least 5000.

Two dimensional fibrous reinforcement includes fibrous mats or non-woven reinforcements or woven roving or bundles of fibres, which can also be braided.

Three dimensional fibrous reinforcement includes stacked or folded fibrous mats or non-woven reinforcements or bundles of fibres or mixtures thereof, e.g. an assembly of the two dimensional form in the third dimension.

In some embodiments, the fibrous reinforcement is in the form of a preform, e.g. a two or three dimensional preform, e.g. a fabric preform. The preform may comprise different layers of fabric. The fibres in the fabric of the preform can be continuous, chopped, woven, braided, discontinuous, uniaxially arranged, or otherwise configured as known in the art. The fabric of the preform is formed from fibres as herein described, e.g. E glass, carbon fibres, or combinations thereof.

The fibres can have diameters of 6 to 30 micrometres.

Synthetic fibres include polymeric fibres, for example made of polyamide (aliphatic or aromatic), polyester, polyvinylalcohol, polyolefins, polyurethanes, polyvinylchloride, polyethylene, unsaturated polyesters, epoxy resins, vinylesters, or any combination thereof.

Synthetic fibres also include glass fibres, for example of type E, R or S2, carbon fibres, boron fibres or silica fibres. The fibres may be E glass fibres. In an embodiment, the carbon fibre can be Zoltek PX35 NCF 500 gsm 0/90° 127 cm Tricot Pillar Stitch. In an embodiment, the glass fibre can be biaxial 39-EX-600-1270 fabric (E glass, biaxial, 600 gsm, +/-45°).

Exemplary fibres include carbon fibres, graphene fibres, carbon nanotube fibres, metal fibres, ceramic fibres (e.g. SiC, Si₃N₄, SiOC, Al₂O₃), glass fibres, E-glass, S2 glass, aramid fibres, e.g., KEVLAR^{®}, polyethylene fibres, e.g., ultra-high molecular weight polyethylene fibre (e.g. Dyneema^{®} or SPECTRA^{®}), coated carbon fibres (e.g., BN coated carbon fibres, BN/SiC coated carbon fibres), carbon fibres with a surface converted to SiC, coated SiC fibres, liquid crystal polymers (e.g. Vectran^{®}, an aromatic polyester produced by polycondensation of 4-hydroxybenzoic acid and 6-hydroxynaphthalene-2-carboxylic acid), ultra-high molecular weight polypropylene fibre, poly(p-phenylene-2,6-benzobisoxazole) fiber (Zylon^{®}), nylon or combinations thereof. In some embodiments, the fibres are carbon fibres, glass fibres, or ceramic fibres, or combinations thereof. In some embodiments, the fibres are carbon fibres or glass fibres, e.g. E glass fibres. Fibres can be continuous, chopped, woven, braided, discontinuous, uniaxially arranged, or otherwise configured as known in the art.

The polymerization step, i.e. polymerization of the monomers to form the polymer matrix, takes place subsequent to the contacting step. As the polymerization of the comonomers takes place in the presence of the fibrous reinforcement, it may be termed "in-situ polymerization". By the term "in-situ polymerization" as used herein is denoted that the final polymerization of the monomers to form the (meth)acrylate copolymer takes place around, or in the presence of, the fibrous reinforcement in order to obtain directly the PMC. The polymerization step of the method disclosed herein therefore takes place after the composition and fibrous reinforcement have been combined.

The composition used in the method is as described herein, e.g. in relation to the composition. The matrix is the copolymer formed by polymerisation of the monomers and forms the matrix in the PMCs described herein. "Polymer matrix" encompasses "polymer-based matrix" as certain other components of the composition may also be present as detailed above, for example, dispersed in the matrix.

The contacting step may be a wetting step. In the contacting, e.g. wetting, step, the one or more fibrous reinforcement and the monomers or composition are brought into contact. The contacting step may be effected by use of a vacuum. In some embodiments, the monomers or composition infiltrate the fibrous reinforcement. In some embodiments, a vacuum is used to assist the infiltration of the monomers or composition into the fibrous reinforcement. Polymerization of the monomers is then carried out.

The polymerization step may be carried out using known techniques for forming polymer matrix composites. The polymerization method for obtaining the (meth)acrylate copolymer matrix may be radical polymerization, anionic polymerization or photopolymerization. The polymerization step may also be termed a curing step. The polymerization or curing may be performed by known methods, for example by means of a heated tool. The heated tool may be maintained at a temperature between 20 and 60°C, for example between 45 and 60°C. The tool may be formed of aluminium.

The contacting step involves contacting or wetting the fibrous reinforcement with the composition as herein described. In such embodiments, the method may further comprise a step of preparing the composition comprising a (meth)acrylate monomer and a halogenated flame retardant monomer, prior to contacting the fibrous reinforcement with the composition. Further additives may be included in the composition as described above. These additives may be dissolved or dispersed into one or both of the monomers, e.g. monomers in liquid form, before the contacting step. Suitable methods for this step include shear mixing, and the liquid monomers may be heated.

Several methods may be used to prepare three dimensional PMCs. These methods include lamination, pultrusion, infusion, vacuum bag moulding, pressure bag moulding, autoclave moulding, resin transfer moulding (RTM), reinforced reaction injection moulding (R-RIM) and variants thereof, press moulding, filament winding, compression moulding or wet lay-up. All of these methods comprise the steps of wetting the fibrous reinforcement with said composition before the polymerization step. The desired additives may be dissolved or dispersed into the composition.

The composition may be mixed such that the non-monomer components are uniformly dispersed in the monomers, prior to contacting the composition with the fibrous reinforcement. In this way, the non-monomer components, e.g. flame retardants, synergists and any other components may be uniformly dispersed throughout the polymer matrix of the resulting composite.

Techniques such as resin infusion and resin transfer moulding are convenient and low-cost manufacturing methods which can be carried out at ambient temperatures. However, these methods require resins with suitable viscosities, e.g. less than 200 mPa.s, and are typically used for thermosets. The compositions described herein can be used as resins in resin infusion and resin transfer moulding techniques. The inventors have surprisingly found that using the compositions as described herein, which comprise monomers, facilitates use of these methods as the composition can have the desired viscosity characteristics for these methods, as well as improved flame resistance in the resulting composite.

In a particular embodiment, the method involves resin infusion. In the infusion method, the composition is aspired into the fibrous reinforcement present in a mould, e.g. by application of a slight vacuum. The fibrous reinforcement is infused and at least partially, e.g. completely, wetted by the composition. After a period of time since the introduction of the composition to the mould has elapsed, for example 0.5-2 hours, the resulting PMC can be demoulded.

In a particular embodiment, the method involves resin transfer moulding. Resin transfer moulding is a method using a two sided mould set which forms both surfaces of the PMC. The lower side is a rigid mould. The upper side can be a rigid or flexible mould. Flexible moulds can be made from composite materials, silicone or extruded polymer films such as nylon. The two sides fit together to produce a mould cavity. In resin transfer moulding, the fibrous reinforcement is placed into this cavity and the mould set is closed prior to the introduction of the composition comprising monomers (and other components such as those mentioned herein with regard to the composition). In resin transfer moulding, the method by which the composition is introduced to the fibrous reinforcement in the mould cavity can include vacuum infusion. This process can be performed at either ambient (e.g. 10° C to 60° C or 20 to 50° C) or elevated temperature, e.g. up to 200° C, optionally from 50° C to 160° C, optionally from 50° C to 100° C, optionally from 50° C to 80° C. After a period of time since the introduction of the composition to the mould has elapsed, for example 0.5-2 hours, the resulting PMC can be demoulded.

In some embodiments, the steps of contacting and polymerizing (or curing) take place in a mould. The PMC thus formed can be removed from the mould, i.e. demoulded, after 0.5-2 hours, i.e. 0.5-2 hours after the introduction of the composition to the mould.

In some embodiments, the method of preparing the polymer matrix composite is resin transfer moulding or resin infusion. Manufacturing PMMA-based PMCs using infusion or resin transfer moulding can provide a cost reduction of 70% compared to existing materials, improved recyclability compared to existing materials, which leads to an increased sustainability within the product life cycle. In addition, because of the bulky groups in certain halogenated flame retardants, for example 2,3,4,5,6-pentabromobenzylacrylate, 2,3,4,5,6-pentabromobenzyl methacrylate, tribromoneopentyl acrylate and tribromoneopentyl methacrylate, the copolymer formed between the (meth)acrylate monomer and the halogenated flame retardant monomer is more rigid. Increasing the rigidity of the polymer backbone can lead to a higher glass transition temperature (T_{g}) (e.g. around 120°C or higher) than MMA alone (90°C). This means that the copolymer and the resulting PMC has a higher structural integrity than a PMC comprising a polymer formed from (meth)acrylate monomers. PMCs according to the present disclosure perform satisfactorily in a short beam shear test at 60°C. The chemical resistance of PMMA matrices is also poor as they are amorphous - for example, a PMMA matrix can be dissolved in acetone simply be soaking. Including a comonomer can achieve better chemical resistance in the copolymers and resulting PMC than seen with PMMA alone.

In an embodiment, the contacting, e.g. wetting, step of the fibrous reinforcement is made in a closed mould, by resin transfer moulding or by infusion.

Optionally, the contacting, e.g. wetting, step of the fibrous reinforcement and the preparation of the composite material take place in the same mould, which is a closed mould. Using the same closed mould avoids the transfer of the material after contacting, e.g. wetting, and polymerizing in a closed mould ensures a good distribution of heat, which helps to provide a satisfactory yield of polymerization.

The mould may be opaque towards visible and ultraviolet radiation at least on one side.

A closed mould will avoid and reduce the evaporation of the monomer and protect the environment.

In some embodiments, the monomers and/or the composition are liquid at 25 °C.

The PMC component formed by the above method can be post-processed by thermoforming or melt blending of the PMC component to achieve a new shape after the initial processing. The PMC can also be adhered to another material, for example, a polymeric, metallic, ceramic, or composite material. Adhesives may be applied to join the PMC to the further material. Alternatively, welding may be used to join the PMC to the further material.

Suitable steps for forming the composites of the invention by a vacuum assisted resin infusion process are outlined below. These are for the purposes of example only and are non-limiting:

### Example procedure for vacuum assisted resin infusion process for making PMC plaques or parts:

### Preparation of fibrous preform:

Step 1 - Prepare a preform by laying up required number of fabric plies (formed from fibres discussed above) of suitable dimensions on a tool.

Step 2 - Add one sheet of peel ply, one sheet of flow mesh and a vacuum bag film on top of the fabric preform.

Step 3 - Apply vacuum to consolidate the preform.

### Preparation of composition

Step a - Mix monomers and any desired additives carefully such that a uniform dispersion is formed.

Step b - Add the required amount of catalyst to the dispersion.

### Preparation of composite part

Step i - Introduce the dispersion by applying vacuum to the preform while the tool temperature is maintained between 40 and 60 °C, e.g. between 45 and 60 °C. Two thermocouples may be used to monitor the tool temperature, e.g. one at a resin inlet port and the second one near an outlet port.

Step ii - Apply vacuum and maintain the tool temperature at 40-60° C, e.g. either 40° C or 60° C throughout the curing process.

Step iii - After 0.5-2 hours, demould PMC.

A PMC produced by a method as herein described forms a further aspect of the present disclosure.

The present disclosure therefore also provides a polymer matrix composite (PMC) or PMC component, for example as manufactured by the method disclosed herein, comprising a (meth)acrylate copolymer matrix formed from a (meth)acrylate monomer and a halogenated flame retardant monomer, and fibrous reinforcement.

The (meth)acrylate copolymer, monomers and fibrous reinforcement are as described herein with relation to the composition and the method. The PMC matrix may be formed from the composition as herein described.

The fibrous reinforcement may be present in the PMC or PMC component in an amount of 50-90 wt.%, e.g. 60-80 wt.%, e.g. 62-67 wt.% based on the total weight of the PMC. In an embodiment, the fibrous reinforcement may be present of an amount of 70-75 wt.% based on the total weight of the PMC.

In an embodiment, the fibrous reinforcement is, or is formed from, carbon fibres which are present in an amount of 60-70 wt.%, e.g. 62-67 wt.% based on the total weight of the PMC. In an embodiment, the fibrous reinforcement is, or is formed from, glass fibres which are present in an amount of 70-80 wt.%, e.g. 70-75 wt.% based on the total weight of the PMC.

The polymer matrix comprises a copolymer of the monomers described herein. Any non-monomer components as herein described, e.g. flame retardants, synergists, catalyst, and any other components may also be dispersed, e.g. uniformly dispersed, throughout the copolymer matrix of the resulting composite.

In some embodiments, the (meth)acrylate copolymer matrix, i.e. that formed by the polymerization, is a copolymer of methyl methacrylate and one or more of 2,3,4,5,6-pentabromobenzylacrylate, 2,3,4,5,6-pentabromobenzyl methacrylate, tribromoneopentyl acrylate and/or tribromoneopentyl (meth)acrylate.

PMMA alone is flammable, however copolymerising MMA with a halogenated flame retardant monomer as herein described provides a (meth)acrylate copolymer that has improved flame resistance and is therefore suitable for use in aerospace applications.

The PMC may be formed into components which have a laminate structure. These components may be formed by bonding together by lamination several layers or sheets of the PMC. The thickness of the laminate component can be 0.5-3 mm, optionally 1-2 mm.

Typically, thinner laminates (i.e. less than 2 mm in thickness) are more susceptible to failing flame tests. However, laminates of 1-2 mm in thickness which are formed from the PMC of the present disclosure, which contain a (meth)acrylate copolymer formed from a (meth)acrylate monomer and a halogenated flame retardant monomer, have improved fire resistance characteristics and reduced weight, and are thus particularly suitable for use in aerospace applications, e.g. cabin products such as seats.

The PMC of the present disclosure may be used to manufacture an article, for example, a seat component such as a seat back, seat pan, seat back legs, seat back frame, or tray tables. The article, or a part thereof may be formed directly by the method, e.g. when a mould is used, or the composite of the present disclosure may subsequently be used in the manufacture of an article or part thereof. Articles comprising, or formed from, the PMC described herein form a further aspect of the disclosure. Such articles include those mentioned herein, for example, aerospace components, particularly interior cabin articles such as seating parts, e.g. seat backs, seat pans or seat back legs.

In some embodiments, e.g. for aircraft interior applications, the glass transition temperature (Tg) of the polymer matrix composite is at least 28 °C above the maximum operating temperature (MOT) or maximum storage temperature (whichever is greater) of the article. In some embodiments, the glass transition temperature is above 80 °C, for example when taking the onset of storage modulus from DMA as the Tg.

References to "comprises" and/or "comprising," should be understood to also encompass "consist(s) of", "consisting of", "consist(s) essentially of" and "consisting essentially of".

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It will be readily appreciated by the skilled person that the various optional and preferred features of the disclosure as described above may be applicable to all the various aspects of the disclosure discussed.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A composition comprising a (meth)acrylate monomer and a halogenated flame retardant monomer.

2. The composition of claim 1, wherein the (meth)acrylate monomer is methyl methacrylate (MMA).

3. The composition of claim 1 or claim 2, wherein the halogenated flame retardant monomer is a brominated flame retardant monomer, optionally 2,3,4,5,6-pentabromobenzylacrylate, 2,3,4,5,6-pentabromobenzyl methacrylate, tribromoneopentyl acrylate or tribromoneopentyl (meth)acrylate.

4. The composition of any preceding claim, wherein the (meth)acrylate monomer is present in an amount of 70 to 95 wt.%, and/or wherein the brominated flame retardant monomer is present in an amount of 5 to 30 wt.%, based on the total weight of the monomers.

5. The composition of any preceding claim, wherein the composition further comprises an inorganic flame retardant synergist, optionally wherein the inorganic flame retardant synergist is antimony trioxide.

6. The composition of any preceding claim, wherein the inorganic flame retardant synergist is present in the composition in an amount of 5 to 10 wt.%, based on the total weight of the composition.

7. The composition of any preceding claim, wherein the composition further comprises a radical initiator.

8. A method of preparing a polymer matrix composite, said method comprising:
(i) contacting fibrous reinforcement with a composition according to any preceding claim; and
(ii) polymerizing the monomers in said composition to form a (meth)acrylate copolymer matrix in contact with the fibrous reinforcement.

9. The method of claim 8, wherein the polymerizing is radical polymerization, anionic polymerization or photopolymerization.

10. The method of claim 8 or claim 9, wherein the method of preparing the polymer matrix composite is resin transfer moulding or infusion.

11. The method of any one of claims 8-10, wherein the fibrous reinforcement is or comprises glass fibres, carbon fibres, or combinations thereof.

12. The method of any one of claims 8-11, wherein the steps of contacting and polymerizing take place in a mould.

13. A polymer matrix composite comprising:
fibrous reinforcement; and
a (meth)acrylate copolymer matrix formed from a (meth)acrylate monomer and a halogenated flame retardant monomer.

14. The polymer matrix composite of claim 13, wherein the fibrous reinforcement is present in the PMC in an amount of 60-80% by weight, based on the total weight of the PMC.

15. An article formed from, or comprising, the polymer matrix composite of claim 13 or claim 14.
